# NEUE EUROPÄISCHE PATENTSCHRIFT

(11) **EP 0 406 633 B2**
(45) Veröffentlichungstag und Bekanntmachung des Hinweises auf die Entscheidung über den Einspruch: **11.11.1998**
(45) Hinweis auf die Patenterteilung: 16.08.1995
(21) Anmeldenummer: 90111806.7
(22) Anmeldetag: 22.06.1990
(51) Int. Cl.: C01G 49/02, C01G 49/06, C01G 49/08

(54) **Synthetisches grobteiliges Eisenoxid, Verfahren zu seiner Herstellung sowie dessen Verwendung**
Synthetic coarse ironoxide, process for its preparation and its use
Oxyde de fer synthétique à grosses particules, procédé pour sa préparation et son utilisation

(30) Priorität: 05.07.1989 DE 3922106
(43) Veröffentlichungstag der Anmeldung: 09.01.1991
(73) Patentinhaber: BAYER AG, 51368 Leverkusen (DE)
(72) Erfinder: Kröckert, Bernd, Dr., D-4230 Wesel (DE); Buxbaum, Gunter, Dr., D-4150 Krefeld (DE)

(56) Entgegenhaltungen:
- GB-A- 1 094 900
- US-A- 4 201 761
- US-A- 4 459 276
- Brochure: Mapico, Iron Oxide Reagents, 1970, Missoury, US
- Brochure: Mapico, Pure Iron Oxides, 1960, Missoury, US

## Beschreibung

Die vorliegende Erfindung betrifft ein synthetisches grobteiliges Eisenoxid, Verfahren zu seiner Herstellung sowie dessen Verwendung.

Synthetische Eisenoxide werden üblicherweise nach dem Anilinverfahren, dem Penniman-Verfahren, dem Fällverfahren oder durch das Röstverfahren hergestellt (Winnacker-Küchler, Chemische Technologie, Band 3, Anorganische Technologie II, 4. Auflage 1983, Seiten 376 bis 380). Die so erhaltenen Eisenoxide sind in der Regel Eisenoxid-Pigmente und entsprechend feinteilig. Synthetische grobteilige Eisenoxide, die als Schleif- und Poliermittel sowie als Katalysator geeignet sind, konnten bisher nicht in reiner Form hergestellt werden.

Zwar erfüllen natürlich vorkommende Eisenoxide oft das Kriterium der Grobteiligkeit, ihre Zusammensetzung ist jedoch sehr uneinheitlich und es finden sich viele Verunreinigungen, insbesondere hohe SiO₂- und Mangan-Gehalte.

Aus der DE-A-2 940 156 sind zwar grobteilige Eisenoxidgranulate mit Durchmessern von 0,3 bis 0,7 mm bekannt. Diese werden aber aus Eisenoxidfarbpigmenten durch einen zusätzlichen Granulierschritt hergestellt und zerfallen bei geringen mechanischen Belastungen, z.B. bei der Einarbeitung in Lacken oder Beton, in ihre Einzelteilchen.

Aufgabe der vorliegenden Erfindung ist es nunmehr, ein geeignetes Eisenoxid zur Verfügung zu stellen, welches die beschriebenen Nachteile des Standes der Technik nicht aufweist.

Es wurde nun gefunden, daß synthetisches poröses grobteiliges Eisenoxid eine mittlere Teilchengröße zwischen 1 und 50 µm aufweist, dessen Oberflache S_{BET} 1 bis 5 m²/g beträgt und der SiO₂-Gehalt weniger als 0,5 %, besonders bevorzugt weniger als 0,1 %, die Stampfdichte >1 g/cm³ ist und der Mangan-Gehalt weniger als 0,1 % beträgt und erhältlich ist durch Umsetzung von metallischem Eisen in sauer Eisensalzlösung bei erhöhter Temperatur mit Luft und/oder Sauerstoff zu α-FeOOH und gegebenenfalls anschließender Konvertierung zu α-Fe₂O₃, γ-Fe₂O₃, Fe₃O₄ oder bertholoiden Eisenoxiden, wobei Suspensionen mit weniger als 1 g/l α-FeOOH als Keim bis zu Gehalten von 50 bis 200 g/l α-FeOOH, vorzugsweise 80 bis 170 g/l α-FeOOH, aufgebaut werden. Die BET-Oberfläche wird hierbei nach der 1-Punkt-Stickstoff-Methode bestimmt. Besonders geeignet sind erfindungsgemäße synthetische grobteilige Eisenoxide mit einem geringen Verunreinigungsgehalt.

Das erfindungsgemäße synthetische poröse grobteilige Eisenoxid kann α-FeOOH (Goethit), α-Fe₂O₃ (Hämatit), γ-Fe₂O₃ (Maghämit), Fe₃O₄ (Magnetit) oder ein bertholoides Eisenoxid sein.

Gegenstand dieser Erfindung ist auch ein Verfahren zur Herstellung erfindungsgemäßer synthetischer grobteiliger Eisenoxide. Überraschenderweise war es möglich, dieses erfindungsgemäße Eisenoxid in definierter Form in einem Verfahrensschritt herzustellen. Hierzu wurde analog dem Penniman-Zoph-Prozeß (US-A-1.327.061 und US-A-1.368.748), bei dem Fe(II) zu Fe(III) oxidiert wird und die freiwerdende Säure vorhandenen Eisenschrott unter Bildung von Eisen(II) auflöst, sehr grobteiliges Eisenoxid hergestellt.

Hierbei ist es notwendig, als Keim, der unabhängig aus FeSO₄ und Natronlauge hergestellt wird, weniger als 1 g/l α-FeOOH einzusetzen. Je geringer die Keimmenge, desto grobteiliger wird das erfindungsgemäße Eisenoxid, das phasenrein als α-FeOOH aber mit schwammartiger Tertiärstruktur anfällt. Diese Keime werden dann weiter aufgebaut. Das erfindungsgemäße Verfahren zur Herstellung von synthetischem porösen grobteiligen Eisenoxid durch Umsetzung von metallischem Eisen in saurer Eisensalzlösung bei erhöhter Temperatur mit Luft und/oder Sauerstoff zu α-FeOOH und gegebenenfalls anschließender Konvertierung zu α-Fe₂O₃, γ-Fe₂O₃, Fe₃O₄ oder bertholoiden Eisenoxiden ist dadurch gekennzeichnet, daß Suspensionen mit weniger als 1 g/l α-FeOOH als Keim bis zu Gehalten von 50 bis 200 g/l α-FeOOH, vorzugsweise 80 bis 170 g/l α-FeOOH, aufgebaut werden.

Im Falle der Reaktion bis zum α-FeOOH wird so ein dunkelbraunes Pulver mit hoher Stampfdichte und geringen Gehalten von SiO₂ und Mangan erhalten Das α-FeOOH fällt mit schwammartiger Tertiärstruktur an. Die Oberfläche S_{BET} von 1 bis 5 m²/g bei einer mittleren Teilchengröße von 1 bis 50 µm ist unerwartet und charakterisiert die schwammartige poröse Tertiärstruktur der erfindungsgemäßen Einzelteilchen.

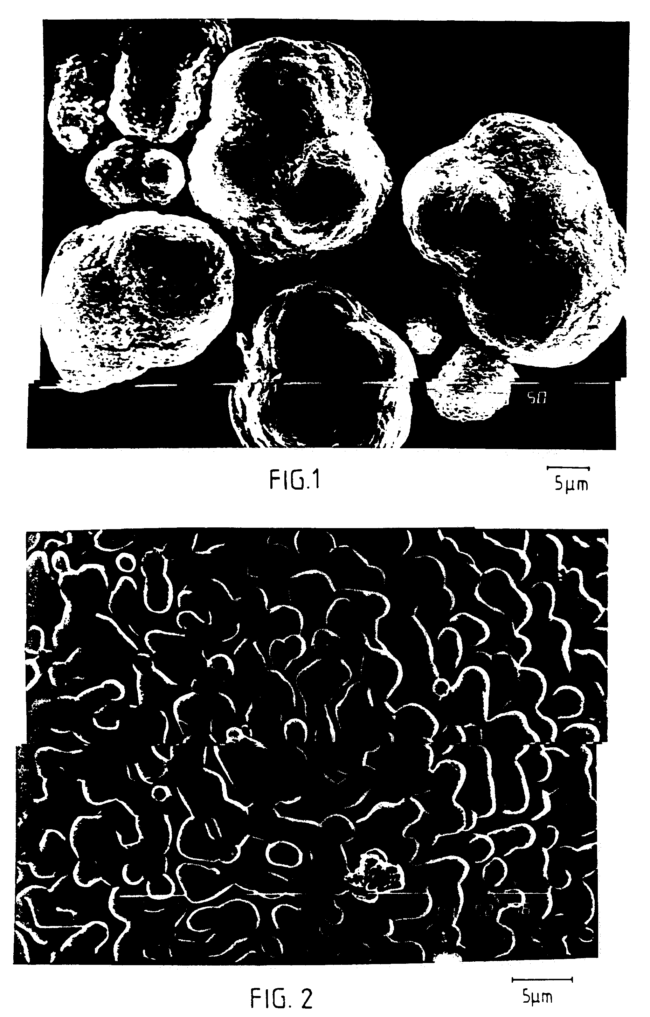

Die Vergrößerung der Teilchen aus Fig. 1 in Fig. 2 zeigt deutlich, daß die Oberfläche aus einer Vielzahl verwachsener Einzelteilchen besteht und eine große Zahl von Poren aufweist.

Der Pigmentaufbau zu α-FeOOH ist grundsätzlich auch nach dem Fällverfahren möglich, bei dem FeSO₄ durch Sauerstoff oxidiert wird und die sich bildenden Protonen durch Natronlauge neutralisiert werden. Aufgrund der hierbei entstehenden hohen Salzlast ist dieses Verfahren aus ökologischer Sicht nicht anzustreben.

Aus dem erfindungsgemäß erhaltenen grobteiligen α-FeOOH läßt sich in bekannter Weise α-Fe₂O₃ herstellen. Dieses geschieht dadurch, daß das grobteilige α-FeOOH bei Temperaturen von 600 bis 900°C geglüht wird. Aus dem α-Fe₂O₃ läßt sich unter reduktiven Bedingungen Fe₃O₄ oder Eisenmetall herstellen. Das Fe₃O₄ kann weiter zu γ-Fe₂O₃ oxidiert werden, ebenso zu bertholoiden Eisenoxiden (Ullmanns Enzyklopädie der technischen Chemie, 4. neubearbeitete Auflage, Band 18, Pigmente anorganisch, Seiten 600 bis 604 und 643 bis 644).

Gegenstand dieser Erfindung ist auch die Verwendung der erfindungsgemäßen synthetischen grobteiligen Eisenoxide als Schleif- und Poliermittel, als Katalysatorrohstoffe und als Ausgangsmaterial für die Herstellung grobteiliger Eisenpulver mit poröser Struktur.

Nachfolgend wird die Erfindung beispielhaft beschrieben, wodurch jedoch keine Einschränkung auf die Beispiele zu sehen ist.

### Beispiel 1

Keimherstellung: Eine wäßrige Lösung von Eisen-(II)-sulfat mit 200 g/l FeSO₄ wird mit soviel 30 %iger Natronlauge unter Rühren versetzt, daß 40 % des Eisens als Eisen-(II)-hydroxid gefällt werden können. Durch Begasung mit Luft bei Temperaturen von 30 bis 35° C wird Fe(II) zu Fe(III) oxidiert; dabei fällt der pH-Wert von 6 auf 3,5. Damit ist die Keimbildung beendet.

Vervielfachung des Keims nach dem Penniman-Verfahren: Es wird eine Suspension mit 0,5 g/l Keim, gerechnet als FeOOH, 40 g/l FeSO₄ und 90 g/l Eisenschrott hergestellt.

Die Suspension wird gerührt und auf 85°C erhitzt. Nach Erreichen der Temperatur wird mit 120 l/h Luft pro Liter Suspension begast. Die Vervielfachung des Keims wird beendet, wenn 130 g/l FeOOH vorliegen. Es wird nach den üblichen Methoden filtriert, salzfrei gewaschen und getrocknet. Man erhält ein braunes Pulver.

### Beispiel 2

Abweichend von Beispiel 1 wird die Suspension mit 0,1 g/l Keim, gerechnet als FeOOH, und 100 g/l Eisenschrott angesetzt. Nach 64 Stunden sind in der Suspension 121 g/l FeOOH, die wie in Beispiel 1 aufgearbeitet werden (Tabelle 1).

### Beispiel 3

Abweichend von Beispiel 1 wird die Reaktionssuspension ohne Keim hergestellt. Nach 96 h sind in der Suspension 155 g/l FeOOH, die aufgearbeitet und charakterisiert werden (Tabelle 1).

### Beispiel 4

Das Produkt aus Beispiel 2 wird in einem Drehbirnenofen 1 h bei 900°C geglüht. Man erhält rotschwarzes α-Fe₂O₃, Tabelle 1.

### Beispiel 5

Das Produkt aus Beispiel 4 wird in einem Drehbirnenofen bei 450°C unter Wasserstoffatmosphäre zu Fe₃O₄ reduziert, Tabelle 1.

### Beispiel 6

Das Produkt aus Beispiel 5 wird in einem Drehbirnenofen bei 250°C unter oxidierenden Bedingungen zu γ-Fe₂O₃ umgewandelt, Tabelle 1.

### Beispiel 7

Das Produkt aus Beispiel 4 wird in einem Wirbelbett bei 425°C unter reduzierender Atmosphäre zu Eisenmetallpulver reduziert. Man erhält ein Metallpulver mit einer S_{BET} von 7,6 m²/g, einer Stampfdichte von 2,21 g/cm³ und einem Metallgehalt von 99,7 % Fe.

### Beispiel 8

Die Abrasivität des Produktes aus Beispiel 4 wurde nach S. Keifer und A. Wingen, farbe + lack 79 (1973), S. 866 bis 873, bestimmt. Hieraus ergab sich ein Abrieb von 211 %, bezogen auf das Handelsprodukt der Bayer AG Bayertitan® R-FD-I.

**Tabelle 1**

| Produkt aus | S_{BET} [m²/g] | mittlerer Teilchendurchmesser* [µm] | Stampfdichte** [g/cm³] | SiO₂ % | Mn % |
|---|---|---|---|---|---|
| 1. Beispiel | 3,1 | 10,1 | 1,57 | 0,020 | 0,009 |
| 2. Beispiel | 2,6 | 19,2 | 2,18 | 0,018 | 0,014 |
| 3. Beispiel | 1,6 | 25,1 | 2,21 | 0,023 | 0,012 |
| 4. Beispiel | 1,3 | 18,7 | 2,42 | 0,025 | 0,017 |
| 5. Beispiel | 2,2 | 16,1 | 2,34 | 0,028 | 0,015 |
| 6. Beispiel | 1,8 | 13,7 | 2,25 | 0,024 | 0,019 |

| | | | | | |
|---|---|---|---|---|---|
| * nach Particle Size Analysis H. G. Barth, Shao-Thang Sun, R. M. Nickel; Anal. Chem. 1987, 59, 142 R bis 162 R | | | | | |
| ** nach DIN 53 194 (gemäß ISO-DIN 787). | | | | | |

## Patentansprüche

1. Synthetisches poröses grobteiliges Eisenoxid, welches eine mittlere Teilchengröße zwischen 1 und 50 µm aufweist, wobei die Oberfläche S_{BET} 1 bis 5 m²/g beträgt, die Stampfdichte >1 g/cm³ ist und welches einen SiO₂-Gehalt < 0,5 % vorzugsweise < 0,1 %, und einen Mangan-Gehalt < 0,1 % aufweist und erhältlich ist durch Umsetzung von metallischem Eisen in sauer Eisensalzlösung bei erhöhter Temperatur mit Luft und/oder Sauerstoff zu α-FeOOH und gegebenenfalls anschließender Konvertierung zu α-Fe₂O₃, γ-Fe₂O₃, Fe₃O₄ oder bertholoiden Eisenoxiden, wobei Suspensionen mit weniger als 1 g/l α-FeOOH als Keim bis zu Gehalten von 50 bis 200 g/l α-FeOOH, vorzugsweise 80 bis 170 g/l α-FeOOH, aufgebaut werden.

2. Synthetisches poröses grobteiliges Eisenoxid gemäß Anspruch 1, dadurch gekennzeichnet, daß das Eisenoxid α-FeOOH oder Goethit ist.

3. Synthetisches poröses grobteiliges Eisenoxid gemäß Anspruch 1, dadurch gekennzeichnet, daß das Eisenoxid α-Fe₂O₃ oder Hämatit ist.

4. Synthetisches poröses grobteiliges Eisenoxid gemäß Anspruch 1, dadurch gekennzeichnet, daß das Eisenoxid γ-Fe₂O₃ oder Maghämit ist.

5. Synthetisches poröses grobteiliges Eisenoxid gemäß Anspruch 1, dadurch gekennzeichnet, daß das Eisenoxid Fe₃O₄ oder Magnetit ist.

6. Synthetisches poröses grobteiliges Eisenoxid gemäß Anspruch 1, dadurch gekennzeichnet, daß das Eisenoxid ein bertholoides Eisenoxid ist.

7. Verfahren zur Herstellung von synthetischem porösem grobteiligem Eisenoxid gemäß einem oder mehreren der Ansprüche 1 bis 6 durch Umsetzung von metallischem Eisen in sauer Eisensalzlösung bei erhöhter Temperatur mit Luft und/oder Sauerstoff zu α-FeOOH und gegebenenfalls anschließender Konvertierung zu α-Fe₂O₃, γ-Fe₂O₃, Fe₃O₄ oder bertholoiden Eisenoxiden, dadurch gekennzeichnet, daß Suspensionen mit weniger als 1 g/l α-FeOOH als Keim bis zu Gehalten von 50 bis 200 g/l α-FeOOH, vorzugsweise 80 bis 170 g/l α-FeOOH, aufgebaut werden.

8. Verwendung der synthetischen porösen grobteiligen Eisenoxide gemäß einem oder mehreren der Ansprüche 1 bis 6 als Schleif- und Poliermittel, als Katalysatorrohstoffe und als Ausgangsmaterial für die Herstellung grobteiliger Eisenpulver mit poröser Struktur.

## Claims

1. Synthetic, porous, coarse-particled iron oxide which has an average particle size between 1 and 50 µm, wherein the specific surface S_{BET} is 1 to 5 m²/g and the tamped density is > 1 g/cm³, and which has an SiO₂ content < 0.5 %, preferably < 0.1 %, and a manganese content < 0.1 % and which is obtainable by the reaction of metallic iron in an acid iron salt solution at elevated temperature with air and/or oxygen to form α-FeOOH, optionally with subsequent conversion to α-Fe₂O₃, γ-Fe₂O₃, Fe₃O₄ or berthollide iron oxides, wherein suspensions containing less than 1 g/l α-FeOOH as a nucleus are built up to contents of 50 to 200 g/l α-FeOOH, preferably 80 to 170 g/l α-FeOOH.

2. Synthetic, porous, coarse-particled iron oxide according to claim 1, characterised in that the iron oxide is α-FeOOH or goethite.

3. Synthetic, porous, coarse-particled iron oxide according to claim 1, characterised in that the iron oxide is α-Fe₂O₃ or haematite.

4. Synthetic, porous, coarse-particled iron oxide according to claim 1, characterised in that the iron oxide is γ-Fe₂O₃ or maghaemite.

5. Synthetic, porous, coarse-particled iron oxide according to claim 1, characterised in that the iron oxide is Fe₃O₄ or magnetite.

6. Synthetic, porous, coarse-particled iron oxide according to claim 1, characterised in that the iron oxide is a berthollide iron oxide.

7. A method of preparing synthetic, porous, coarse-particled iron oxide according to one or more of claims 1 to 6 by the reaction of metallic iron in an acid iron salt solution at elevated temperature with air and/or oxygen to form α-FeOOH, optionally with subsequent conversion to α-Fe₂O₃, γ-Fe₂O₃, Fe₃O₄ or berthollide iron oxides, characterised in that suspensions containing less than 1 g/l α-FeOOH as a nucleus are built up to contents of 50 to 200 g/l α-FeOOH, preferably 80 to 170 g/l α-FeOOH.

8. Use of the synthetic, porous, coarse-particled iron oxides according to one or more of claims 1 to 6 and grinding and polishing media, as catalyst raw materials and as a starting material for the production of coarse-particled iron powder having a porous structure.

## Revendications

1. Oxyde de fer synthétique poreux en grosses particules, à une dimension de particule moyenne de 1 à 50 µm, avec une surface BET de 1 à 5 m²/g, une densité à l'état tassé supérieure à 1 g/cm³, une teneur en SiO₂ inférieure à 0,5 %, de préférence inférieure à 0,1 %, une teneur en manganèse inférieure à 0,1 %, qu'on obtient par réaction du fer métallique dans une solution acide de sel de fer à température élevée avec de l'air et/ou de l'oxygène, donnant l'α-FeOOH qu'on convertit ensuite le cas échéant en α-Fe₂O₃, γ-Fe₂O₃, Fe₃O₄ ou oxyde de fer bertholloïde, les suspensions, contenant moins de 1 g/l d'α-FeOOH, en tant que germes, étant soumises à croissance jusqu'à des teneurs de 50 à 200 g/l d'α-FeOOH, de préférence de 80 à 170 g/l d'α-FeOOH

2. Oxyde de fer synthétique poreux en grosses particules selon la revendication 1, caractérisé en ce qu'il consiste en α-FeOOH ou goethite.

3. Oxyde de fer synthétique poreux en grosses particules selon la revendication 1, caractérisé en ce qu'il consiste en α-Fe₂O₃ ou hématite.

4. Oxyde de fer synthétique poreux en grosses particules selon la revendication 1, caractérisé en ce qu'il consiste en γ-Fe₂O₃ ou maghémite.

5. Oxyde de fer synthétique poreux en grosses particules selon la revendication 1, caractérisé en ce qu'il consiste en Fe₃O₄ ou magnétite.

6. Oxyde de fer synthétique poreux en grosses particules selon la revendication 1, caractérisé en ce qu'il consiste en un oxyde de fer bertholloïde.

7. Procédé de préparation d'un oxyde de fer synthétique poreux en grosses particules selon une ou plusieurs des revendications 1 à 6 par réaction du fer métallique dans une solution acide de sel de fer à température élevée avec de l'air et/ou de l'oxygène, donnant l'α-FeOOH qu'on convertit ensuite le cas échéant en α-Fe₂O₃, γ-Fe₂O₃, Fe₃O₄ ou oxyde de fer bertholloïde, caractérisé en ce que l'on soumet les suspensions contenant moins de 1 g/l d'α-FeOOH en tant que germes, à croissancejusqu'à des teneurs de 50 à 200 g/l d'α-FeOOH, de préférence de 80 à 170 g/l d'α-FeOOH.

8. Utilisation des oxydes de fer synthétiques poreux en grosses particules selon une ou plusieurs des revendications 1 à 6 en tant qu'agents de meulage et de polissage, en tant que matières premières de la préparation de catalyseurs et en tant que produits de départ de la préparation de fer en poudre grossière à structure poreuse.
